# EUROPÄISCHE PATENTSCHRIFT

(11) **EP 1 924 380 B1**
(45) Veröffentlichungstag und Bekanntmachung des Hinweises auf die Patenterteilung: **26.11.2008**
(21) Anmeldenummer: 06762767.9
(22) Anmeldetag: 22.07.2006
(51) Int. Cl.: B23B 31/32, B23B 31/14, B23Q 5/28

(54) **WERKZEUGKOPF MIT VERSTELLMOTOR**
TOOL HEAD WITH ADJUSTING MOTOR
TETE D'OUTIL COMPORTANT UN MOTEUR DE REGLAGE

(30) Priorität: 13.09.2005 DE 102005043851
(43) Veröffentlichungstag der Anmeldung: 28.05.2008
(73) Patentinhaber: KOMET GROUP Holding GmbH, 74354 Besigheim (DE)
(72) Erfinder: FRONIUS, Jürgen, 74399 Walheim/Neckar (DE); HÖRL, Roland, 74357 Bönnigheim (DE)
(74) Vertreter: Wolf, Eckhard
(86) Internationale Anmeldenummer: PCT/EP2006/007226
(87) Internationale Veröffentlichungsnummer: WO 2007/031147

(56) Entgegenhaltungen:
- EP-A2- 0 340 681
- EP-A2- 1 222 983
- WO-A-02/103883
- WO-A-20/04030186
- DE-A1- 2 165 096

## Beschreibung

Die Erfindung betrifft einen Werkzeugkopf für den Einsatz in Werkzeugmaschinen mit einem Grundkörper, mit mindestens einem relativ zum Grundkörper verstellbaren Arbeitsschieber und mit einem im Grundkörper angeordneten, über Getriebemittel auf den Arbeitsschieber einwirkenden Verstellmotor, wobei der als Elektromotor ausgebildete Verstellmotor einen im Grundkörper angeordneten Stator und einen im Stator umlaufenden, eine Abtriebswelle tragenden, in zwei im Abstand voneinander angeordneten Drehlagern gelagerten Rotor aufweist, wobei eines der Drehlager mit einem Außenring in einem grundkörperfesten Statorgehäuse und mit einem Innenring unmittelbar oder mittelbar auf der Abtriebswelle angeordnet ist.

Es ist ein Werkzeugkopf der eingangs angegebenen Art bekannt (EP-1 222 983 B1), bei welchem der Verstellmotor mit seinem im Wesentlichen zylindrischen Motorgehäuse achszentral im Grundkörper angeordnet ist und bei welchem das Statorgehäuse eine den Stator außenseitig axial übergreifende, dreh- und verschiebefest mit dem Stator verbundene Mantelpartie und eine die Mantelpartie auf der dem Getriebe gegenüberliegenden Seite abschließende, den Außenring des zweiten Drehlagers tragende Stirnpartie aufweist. Diese Bauweise erfordert eine Trennstelle zwischen der Antriebsbaugruppe und einer Getriebebaugruppe, die ihrerseits einen entsprechend großen Montageaufwand erfordert.

Ausgehend hiervon liegt der Erfindung die Aufgabe zugrunde, den bekannten Werkzeugkopf der eingangs angegebenen Art dahingehend zu verbessern, dass der Montageaufwand beim Zusammenbau des Werkzeugkopfs reduziert wird und dass eine kleinere Baulänge erzielt werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht primär darin, dass das Statorgehäuse eine den Stator außenseitig partiell axial übergreifende, dreh- und verschiebefest mit dem Stator verbundene Hülsenpartie und einen die Hülsenpartie getriebeseitig abschließenden, den Außenring des ersten Drehlagers tragenden Lagerdeckel aufweist. Die Abtriebswelle ist dabei zweckmäßig koaxial zur Drehachse des Grundkörpers angeordnet.

Eine bevorzugte Ausgestaltung der Erfindung sieht vor, dass das zweite Drehlager in einem auf der dem Lagerdeckel abgewandten Seite innenseitig am Stator fixierten separaten Zentrierring angeordnet ist. Anders als beim Stand der Technik hängt der Zentrierring nicht unmittelbar mit dem Statorgehäuse zusammen. Zwischen der Hülsenpartie und dem Zentrierring befindet sich vielmehr eine Gehäuselücke, die von einer Grundkörperwand überbrückt wird. Die betreffende Grundkörperwand ist in ihrer Kontur an die Außenkontur des Stators im überbrückten Bereich angepasst. Vorteilhafterweise ist das zweite Drehlager mit seinem Außenring am Zentrierring und mit seinem Innenring am Rotor fixiert. Der Verstellmotor kann dabei als Asynchronmotor oder als Gleichstrommotor ausgebildet sein. Der Stator des Verstellmotors weist zweckmäßig ein den Rotor umfassendes Blechpaket mit stirnseitig überstehenden Wickelköpfen auf. Eine besonders kompakte Bauweise wird dadurch erzielt, dass der Stator mit dem zugehörigen Wickelkopf und/oder einem Teil seines Blechpakets in die einseitig offene Hülsenpartie des Statorgehäuses eingreift und dort fixiert und zentriert ist, während der Zentrierring in einen Freiraum im anderen Wickelkopf und/oder im Blechpaket eingreift und dort fixiert und/oder zentriert ist.

Vorteilhafterweise ist die Hülsenpartie mit dem Blechpaket und/oder dem benachbarten Wickelkopf verklebt oder vergossen, während auf der anderen Seite der Zentrierring mit dem benachbarten Wickelkopf und/oder dem Blechpaket formschlüssig verbunden und/oder mit diesem verklebt oder vergossen ist. An seinem einen stirnseitigen Ende trägt der Verstellmotor einen Encoder, der bevorzugt in einem ringförmigen Freiraum innerhalb eines der Wickelköpfe angeordnet ist.

Als Getriebemittel wird vorzugsweise ein als Harmonic-Drive-Getriebe ausgebildetes Untersetzungsgetriebe verwendet, dessen Ein- und Ausgangswellen bevorzugt koaxial im Grundkörper angeordnet sind. Vorteilhafterweise greift die Abtriebswelle des Rotors des Verstellmotors in eine koaxiale Mitnahmeöffnung der Eingangswelle des Untersetzungsgetriebes ein, wobei der Innenring des ersten Drehlagers drehfest mit der Eingangswelle des Untersetzungsgetriebes verbunden sein kann und die Abtriebswelle des Rotors mittelbar über die Eingangswelle im ersten Drehlager gelagert ist.

Eine weitere bevorzugte Ausgestaltung der Erfindung sieht vor, dass das Harmonic-Drive-Getriebe eine vorzugsweise über die Eingangswelle mit der Abtriebswelle des Verstellmotors gekuppelte ovale Antriebsscheibe, einen mit dem Grundkörper drehfest verbundenen innenverzahnten Ring und eine mit der Ausgangswelle gekuppelte flexible außenverzahnte Hülse aufweist. Die Rotorwelle und die anschließenden Getriebepartien weisen vorteilhafterweise einen achszentralen, als Kühlkanal oder als Funktionsdurchführung ausgebildeten Hohlraum auf.

Zur Vermeidung magnetischer Wechselwirkungen zwischen dem Verstellmotor und den Lagerpartien wird gemäß einer bevorzugten Ausgestaltung der Erfindung vorgeschlagen, dass der in den Stator eingreifende Zentrierring aus einem magnetisch nicht leitenden Material besteht und dass zumindest das zweite Drehlager als Hybridlager ausgebildet ist, dessen Wälzkörper aus einem elektrisch isolierenden Material, vorzugsweise aus Keramik bestehen.

Eines der beiden Drehlager bildet zweckmäßig ein Festlager und das andere ein relativ zu diesem axial bewegbares Loslager bildet. Mit dieser Maßnahme lassen sich Verspannungen innerhalb des Antriebsystems, die beispielsweise bei Temperaturänderungen auftreten könnten, vermeiden. Zweckmäßig ist das erste Drehlager als Festlager und das zweite Drehlager als Loslager ausgebildet.

Eine weitere vorteilhafte oder alternative Ausgestaltung der Erfindung sieht vor, dass der Verstellmotor, die Getriebemittel und der verstellbare Arbeitsschieber eine geschlossene Baugruppe bilden, die über eine Trennstelle mit einer einen Anschlussschaft aufweisenden Anschlussbaugruppe lösbar verbunden ist. Die Anschlussbaugruppe weist in diesem Fall eine axial offene Aufnahme für einen axial überstehenden Teil der kombinierten Antriebs/Getriebe-/Schieberbaugruppe auf, die tassenförmig ausgebildet ist und mit den betreffenden Teilen von der offenen Seite her bestückt werden kann.

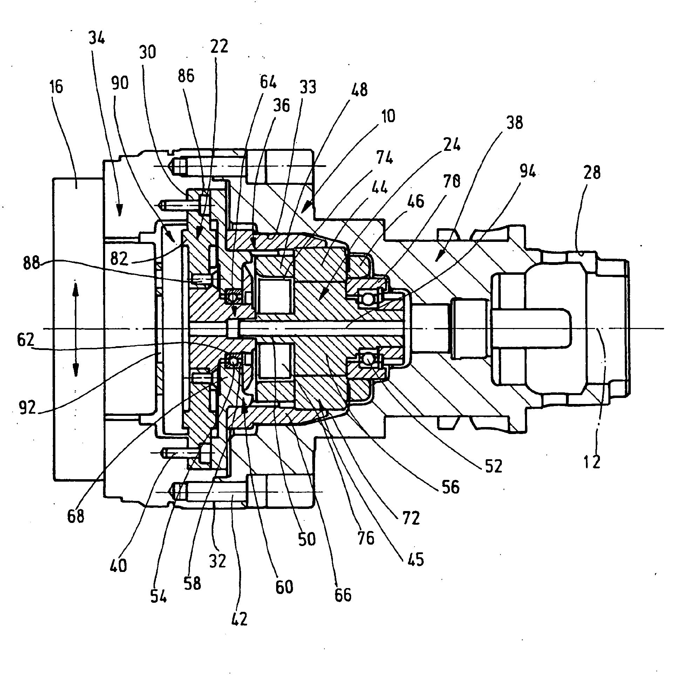

Im Folgenden wird die Erfindung anhand eines in der Zeichnung in schematischer Weise dargestellten Ausführungsbeispiels näher erläutert. Die einzige Figur zeigt einen Längsschnitt durch einen beispielsweise als Plandrehkopf ausgebildeten Werkzeugkopf, der für den Einsatz in Werkzeugmaschinen bestimmt ist.

Der Werkzeugkopf besteht im Wesentlichen aus einem um eine Drehachse 12 drehbaren Grundkörper 10, einen im Grundkörper 10 quer zur Drehachse 12 verschiebbaren, ein nicht dargestelltes Schneidwerkzeug tragenden Arbeitsschieber 16, einem unter Zwischenschaltung eines Untersetzungsgetriebes 22 auf den Arbeitsschieber 16 einwirkenden elektrischen Verstellmotor 24 und einem axial über den Grundkörper 10 überstehenden Werkzeugschaft 28, der mit einer nicht dargestellten Maschinenspindel einer Werkzeugmaschine kuppelbar ist.

Der Werkzeugkopf ist aus drei an Trennstellen 30,32 lösbar miteinander verbundenen Baugruppen zusammengesetzt, einer den Arbeitsschieber 16 aufnehmenden Schieberbaugruppe 34, einer den Verstellmotor 24 und das Untersetzungsgetriebe 22 enthaltenden Antriebsbaugruppe 36 und einer den Werkzeugschaft 28 tragenden, im Bereich der Trennstelle 32 eine tassenförmige Aufnahme 33 aufweisenden Anschlussbaugruppe 38. Die Bauteile der Antriebsbaugruppe 36 und der Schieberbaugruppe 34 werden unter Bildung einer einheitlichen geschlossenen Baugruppe vormontiert und sodann in die tassenförmige Aufnahme 33 der Anschlussbaugruppe 38 eingesetzt. Die Verbindung zwischen den Baugruppen erfolgt mittels achsparallel verlaufender Schrauben 40,42.

Der Verstellmotor 24 ist achszentral im Grundkörper 10 angeordnet. Bei den gezeigten Ausführungsbeispielen handelt es sich um einen beispielsweise als Asynchronmotor ausgebildeten Elektromotor, bestehend aus einem außen liegenden, ringförmigen Blechpaket 44 und zwei axial überstehende Wickelköpfe 46,48 aufweisenden Stator 45 und einem im Stator umlaufenden, eine Abtriebswelle 50 tragenden, in zwei im Abstand voneinander angeordneten Drehlagern 52,54 gelagerten Rotor 56. Eines der Drehlager 54 ist mit einem Außenring 58 in einem grundkörperfesten Statorgehäuse 60 und mit einem Innenring 62 mittelbar über eine Antriebswelle 64 des Untersetzungsgetriebes 22 auf der Abtriebswelle 50 des Verstellmotors 22 angeordnet.

Eine Besonderheit der Erfindung besteht darin, dass das Statorgehäuse 60 eine den Stator 45 außenseitig partiell axial übergreifende, dreh- und verschiebefest mit dem Blechpaket 44 des Stators verbundene Hülsenpartie 66 und einen die Hülsenpartie getriebeseitig abschließenden, den Außenring 58 des Drehlagers 54 tragenden Lagerdeckel 68 aufweist. Der Lagerdeckel 68 und die Hülsenpartie 66 können ein- oder mehrteilig ausgebildet sein.

Das andere Drehlager 52 ist in einem auf der dem Lagerdeckel 68 des Statorgehäuses 60 abgewandten Seite innenseitig am hinteren Wickel kopf 46 oder im Blechpaket 44 fixierten separaten Zentrierring 70 angeordnet. Zwischen dem freien Ende 72 der Hülsenpartie 66 und dem Zentrierring 70 befindet sich eine Gehäuselücke, die von der Innenfläche des Grundkörpers 10 im Bereich der tassenförmigen Aufnahme 33 überbrückt wird. Als besonders vorteilhaft hat es sich erwiesen, wenn der Zentrierring 70 im Inneren des Stators 45 unmittelbar mit dem Wickelkopf 46 und/oder dem Blechpaket 44 verklebt oder vergossen ist. Auch die Verbindung zwischen der Hülsenpartie 66 mit dem Stator 45 kann stoffschlüssig über einen Klebstoff oder über eine Vergussmasse erfolgen.

Innerhalb des vorderen Wickelkopfs 48 befindet sich ein ringförmiger Freiraum 74, der zur Unterbringung eines zwischen Stator und Rotor angeordneten Encoders 76 verwendet werden kann.

Bei dem Untersetzungsgetriebe 22 handelt es sich zweckmäßig um ein Harmonic-Drive-Getriebe, dessen ovale Antriebsscheibe 82 über die motorseitige Abtriebswelle 50 und die getriebeseitige Antriebswelle 64 gekuppelt ist, dessen innen verzahnter Ring 86 mit Hilfe der Schrauben 40 mit dem Grundkörper 10 im Bereich der Antriebsbaugruppe 36 drehfest verbunden ist und dessen flexible außen verzahnte Hülse 90 mit der Ausgangswelle 92 gekuppelt ist. Im Rotor 56 des Verstellmotors 24 und im Untersetzungsgetriebe 22 befindet sich ein zentraler Funktionskanal 94, der beispielsweise von der Maschinenseite her mit einem Kühlschmiermittel beaufschlagt werden kann. Auf der Seite der Schieberbaugruppe ist der Kanal 94 bis zur Schneide des nicht dargestellten Schneidwerkzeugs geführt.

Zusammenfassend ist folgendes festzuhalten: Die Erfindung bezieht sich auf einen Werkzeugkopf für den Einsatz in Werkzeugmaschinen. Der Werkzeugkopf weist mindestens ein relativ zu einem Grundkörper 10 verstellbaren Arbeitsschieber 16 und einen im Grundkörper 10 angeordneten, über Getriebemittel 22 auf den Arbeitsschieber 16 einwirkenden Verstellmotor 24 auf. Der als Elektromotor ausgebildete Verstellmotor weist einen im Grundkörper angeordneten Stator 45 und einen im Stator umlaufenden, eine Abtriebswelle 50 tragenden, in zwei im Abstand voneinander angeordneten Drehlagern 52,54 gelagerten Rotor 56 auf, wobei eines der Drehlager 54 mit einem Außenring 58 in einem grundkörperfesten Statorgehäuse 60 und mit einem Innenring 62 unmittelbar oder mittelbar auf der Abtriebswelle angeordnet ist. Erfindungsgemäß weist das Statorgehäuse 60 eine den Stator außenseitig partiell axial übergreifende, dreh- und verschiebefest mit dem Stator 45 verbundene Hülsenpartie 66 und einen die Hülsenpartie getriebeseitig abschließenden, den Außenring 58 des ersten Drehlagers 54 tragenden Lagerdeckel 68 auf. Das zweite Drehlager 52 ist in einem auf der dem Lagerdeckel des Statorgehäuses abgewandten Seite innenseitig am Stator 45 fixierten separaten Zentrierring 70 angeordnet.

## Patentansprüche

1. Werkzeugkopf für den Einsatz in Werkzeugmaschinen mit einem Grundkörper (10), mit mindestens einem relativ zum Grundkörper (10) verstellbaren Arbeitsschieber (16) und mit einem im Grundkörper (10) angeordneten, über Getriebemittel (22) auf den Arbeitsschieber (16) einwirkenden Verstellmotor (24), wobei der als Elektromotor ausgebildete Verstellmotor (24) einen im Grundkörper (10) angeordneten Stator (45) und einen im Stator umlaufenden, eine Abtriebswelle (50) tragenden, in zwei im Abstand voneinander angeordneten Drehlagern (52,54) gelagerten Rotor (56) aufweist, wobei eines der Drehlager (54) mit einem Außenring (58) in einem grundkörperfesten Statorgehäuse (60) und mit einem Innenring (62) unmittelbar oder mittelbar auf der Abtriebswelle (50) angeordnet ist, **dadurch gekennzeichnet, dass** das Statorgehäuse (60) eine den Stator außenseitig partiell axial übergreifende, dreh- und verschiebefest mit dem Stator (45) verbundene Hülsenpartie (66) und einen die Hülsenpartie getriebeseitig abschließenden, den Außenring (58) des ersten Drehlagers (54) tragenden Lagerdeckel (68) aufweist.

2. Werkzeugkopf nach Anspruch 1, **dadurch gekennzeichnet, dass** die Abtriebswelle (50) koaxial zur Drehachse (12) des Grundkörpers (10) angeordnet ist.

3. Werkzeugkopf nach Anspruch 1 oder 2, **dadurch gekennzeichnet, dass** das zweite Drehlager (52) in einem auf der dem Lagerdeckel (68) des Statorgehäuses (60) abgewandten Seite innenseitig am Stator (45) fixierten separaten Zentrierring (70) angeordnet ist.

4. Werkzeugkopf nach Anspruch 3, **dadurch gekennzeichnet, dass** das zweite Drehlager (52) mit seinem Außenring am Zentrierring (70) und mit seinem Innenring am Rotor (56) fixiert ist.

5. Werkzeugkopf nach einem der Ansprüche 1 bis 4, **dadurch gekennzeichnet, dass** der Verstellmotor (54) als Asynchronmotor oder als Gleichstrommotor ausgebildet ist.

6. Werkzeugkopf nach einem der Ansprüche 1 bis 5, **dadurch gekennzeichnet, dass** der Stator (45) ein den Rotor (56) umfassendes Blechpaket (44) mit stirnseitig überstehenden Wickelköpfen (46,48) aufweist.

7. Werkzeugkopf nach Anspruch 6, **dadurch gekennzeichnet, dass** der Stator (45) mit seinem einen Wickelkopf (48) und/oder einem Teil seines Blechpakets (44) in die Hülsenpartie (66) des Statorgehäuses (60) eingreift und dort fixiert und zentriert ist.

8. Werkzeugkopf nach Anspruch 7, **dadurch gekennzeichnet, dass** die Hülsenpartie (66) im Blechpaket (44) und/oder im benachbarten Wickelkopf (48) verklebt oder vergossen ist.

9. Werkzeugkopf nach einem der Ansprüche 3 bis 8, **dadurch gekennzeichnet, dass** der Zentrierring (70) in einen Freiraum innerhalb eines der Wickelköpfe (46) und/oder des Blechpakets (44) eingreift und dort fixiert und zentriert ist.

10. Werkzeugkopf nach Anspruch 9, **dadurch gekennzeichnet, dass** der Zentrierring (70) mit dem zugehörigen Wickelkopf (46) und/oder dem Blechpaket (44) verklebt oder vergossen ist.

11. Werkzeugkopf nach einem der Ansprüche 1 bis 10, **dadurch gekennzeichnet, dass** der Verstellmotor (24) an einem seiner stirnseitigen Enden einen Encoder (76) trägt.

12. Werkzeugkopf nach Anspruch 11, **dadurch gekennzeichnet, dass** der Encoder in einen ringförmigen Freiraum (74) innerhalb eines der Wickelköpfe (48) angeordnet ist.

13. Werkzeugkopf nach einem der Ansprüche 1 bis 11, **dadurch gekennzeichnet, dass** die Getriebemittel ein vorzugsweise als Harmonic-Drive-Getriebe ausgebildetes Untersetzungsgetriebe (22) bilden.

14. Werkzeugkopf nach Anspruch 13, **dadurch gekennzeichnet, dass** die Ein- und Ausgangswellen des Untersetzungsgetriebes (22) koaxial im Grundkörper angeordnet sind.

15. Werkzeugkopf nach Anspruch 14, **dadurch gekennzeichnet, dass** die Abtriebswelle (50) des Rotors (56) in eine koaxiale Mitnahmeöffnung der Eingangswelle (64) des Untersetzungsgetriebes (22) eingreift.

16. Werkzeugkopf nach Anspruch 14, **dadurch gekennzeichnet, dass** der Innenring (62) des ersten Drehlagers (54) drehfest mit der Eingangswelle (64) des Untersetzungsgetriebes (22) verbunden ist und dass die Abtriebswelle (50) des Rotors (56) mittelbar über die Eingangswelle im ersten Drehlager (54) gelagert ist.

17. Werkzeugkopf nach einem der Ansprüche 12 bis 15, **dadurch gekennzeichnet, dass** das Harmonic-Drive-Getriebe eine vorzugsweise über die Eingangswelle (64) mit der Abtriebswelle (50) des Verstellmotors (24) gekuppelte ovale Antriebsscheibe (82), einen mit dem Grundkörper (10) drehfest verbunden innen verzahnten Ring (86) und eine mit einer Ausgangswelle gekuppelte flexible außen verzahnte Hülse (88) aufweist.

18. Werkzeugkopf nach einem der Ansprüche 1 bis 16, **dadurch gekennzeichnet, dass** der Rotor (56) und die anschließenden Getriebepartien einen axial ausgerichteten, als Kühlkanal oder Funktionsdurchführung ausgebildeten Zentralkanal (90) aufweisen.

19. Werkzeugkopf nach einem der Ansprüche 3 bis 18, **dadurch gekennzeichnet, dass** der in den Stator (45) eingreifende Zentrierring (70) aus einem magnetisch nicht leitendem Material besteht.

20. Werkzeugkopf nach einem der Ansprüche 3 bis 19, **dadurch gekennzeichnet, dass** zumindest das zweite Drehlager (52) als Hybridlager ausgebildet ist, dessen Wälzkörper aus einem elektrisch isolierenden Material, vorzugsweise aus Keramik bestehen.

21. Werkzeugkopf nach einem der Ansprüche 1 bis 20, **dadurch gekennzeichnet, dass** eines der beiden Drehlager (54) ein Festlager und das andere (52) ein relativ zu diesem axiale bewegbares Loslager bildet.

22. Werkzeugkopf nach Anspruch 21, **dadurch gekennzeichnet, dass** das erste Drehlager (54) als Festlager und das zweite Drehlager (52) als Loslager ausgebildet ist.

23. Werkzeugkopf nach einem der Ansprüche 1 bis 22, **dadurch gekennzeichnet, dass** der Verstellmotor (24), die Getriebemittel (22) und der verstellbare Arbeitsschieber (16) eine geschlossene Baugruppe bilden, die über eine Trennstelle (32) mit einer einen Anschlussschaft (28) aufweisenden Anschlussbaugruppe (38) lösbar verbunden ist.

24. Werkzeugkopf für den Einsatz in Werkzeugmaschinen mit einem Grundkörper (10), mit mindestens einem relativ zum Grundkörper (10) verstellbaren Arbeitsschieber (16) und mit einem im Grundkörper (10) angeordneten, über Getriebemittel (22) auf den Arbeitsschieber (16) einwirkenden Verstellmotor (24), wobei der als Elektromotor ausgebildete Verstellmotor (24) einen im Grundkörper (10) angeordneten Stator (45) und einen im Stator umlaufenden, eine Abtriebswelle (50) tragenden, in zwei im Abstand voneinander angeordneten Drehlagern (52,54) gelagerten Rotor (56) aufweist, wobei eines der Drehlager (54) mit einem Außenring (58) in einem grundkörperfesten Statorgehäuse (60) und mit einem Innenring (62) unmittelbar oder mittelbar auf der Abtriebswelle (50) angeordnet ist, **dadurch gekennzeichnet, dass** der Verstellmotor (24), die Getriebemittel (22) und der verstellbare Arbeitsschieber (16) eine geschlossene Baugruppe bilden, die über eine Trennstelle (32) mit einer einen Anschlussschaft (28) aufweisenden Anschlussbaugruppe (38) lösbar verbunden ist.

25. Werkzeugkopf nach Anspruch 23 oder 24, **dadurch gekennzeichnet, dass** die Anschlussbaugruppe (38) eine axial offene tassenförmige Aufnahme (32) für einen axial überstehenden Teil der kombinierten Antriebs-/Getriebe-/Schieberbaugruppe aufweist.

26. Werkzeugkopf nach Anspruch 25, **dadurch gekennzeichnet, dass** die Aufnahme (32) der Anschlussbaugruppe (38) den überstehenden Teil der kombinierten Baugruppe tassenförmig übergreift.

## Claims

1. A tool head for use in machine tools comprising a base body (10), comprising at least one working slide (16) which can be adjusted in relation to the base body (10), and comprising an adjustment motor (24) which is arranged in the base body (10) and acts on the working slide (16) via gear means (22), wherein the adjustment motor (24) which is embodied as an electric motor has a stator (45) which is arranged in the base body (10) and a rotor (56) which rotates in the stator, is fitted with an output shaft (50) and is mounted in two rotary bearings (52, 54) which are arranged at a distance from one another, wherein one of the rotary bearings (54) is arranged with an outer ring (58) in a stator housing (60) which is fixed to the base body and with an inner ring (62) directly or indirectly on the output shaft (50), **characterized in that** the stator housing (60) has a sleeve part (66) which partially engages over the stator axially on the outside and is fixedly connected to the stator (45) in terms of rotation and displacement, and a bearing cover (68) which closes off the sleeve part on the gear side and is fitted with the outer ring (58) of the first rotary bearing (54).

2. The tool head as claimed in claim 1, **characterized in that** the output shaft (50) is arranged coaxially with respect to the rotational axis (12) of the base body (10).

3. The tool head as claimed in claim 1 or 2, **characterized in that** the second rotary bearing (52) is arranged in a separate centering ring (70) which is secured to the stator (45) on the inside, on the side facing away from the bearing cover (68) of the stator housing (60).

4. The tool head as claimed in claim 3, **characterized in that** the second rotary bearing (52) is secured by its outer ring to the centering ring (70) and by its inner ring to the rotor (56).

5. The tool head as claimed in one of claims 1 to 4, **characterized in that** the adjustment motor (54) is embodied as an asynchronous motor or as a DC motor.

6. The tool head as claimed in one of claims 1 to 5, **characterized in that** the stator (45) has a laminated core (44) which surrounds the rotor (56) and has winding heads (46, 48) which protrude at the ends.

7. The tool head as claimed in claim 6, **characterized in that** the stator (45) engages with one of its winding heads (48) and/or part of its laminated core (44) in the sleeve part (66) of the stator housing (60) and is secured therein and centered.

8. The tool head as claimed in claim 7, **characterized in that** the sleeve part (66) is bonded or cast in the laminated core (44) and/or in the adjacent winding head (48).

9. The tool head as claimed in one of claims 3 to 8, **characterized in that** the centering ring (70) engages in a free space within one of the winding heads (46) and/or the laminated core (44) and is secured therein and centered.

10. The tool head as claimed in claim 9, **characterized in that** the centering ring (70) is bonded or cast with the associated winding head (46) and/or the laminated core (44).

11. The tool head as claimed in one of claims 1 to 10, **characterized in that** the adjustment motor (24) is fitted with an encoder (76) on one of its front ends.

12. The tool head as claimed in claim 11, **characterized in that** the encoder is arranged in an annular free space (74) within one of the winding heads (48).

13. The tool head as claimed in one of claims 1 to 11, **characterized in that** the gear means form a step down transmission (22) which is embodied preferably as a harmonic drive transmission.

14. The tool head as claimed in claim 13, **characterized in that** the input and output shafts of the step down transmission (22) are arranged coaxially in the base body.

15. The tool head as claimed in claim 14, **characterized in that** the output shaft (50) of the rotor (56) engages in a coaxial drive opening of the input shaft (64) of the step down transmission (22).

16. The tool head as claimed in claim 14, **characterized in that** the inner ring (62) in the first rotary bearing (54) is connected in a rotationally fixed fashion to the input shaft (64) of the step down transmission (22), and **in that** the output shaft (50) of the rotor (56) is mounted indirectly in the first rotary bearing (54) by means of the input shaft.

17. The tool head as claimed in one of claims 12 to 15, **characterized in that** the harmonic drive transmission has an oval drive plate (82) which is preferably coupled to the output shaft (50) of the adjustment motor (24) via the input shaft (64), an internally toothed ring (86) which is fixedly connected to the base body (10) in terms of rotation and has a flexible, externally toothed sleeve (88) which is coupled to an output shaft.

18. The tool head as claimed in one of claims 1 to 16, **characterized in that** the rotor (56) and the adjoining transmission parts have an axially orientated central duct (90) which is embodied as a cooling duct or functional feed through.

19. The tool head as claimed in one of claims 3 to 18, **characterized in that** the centering ring (70) which engages in the stator (45) is composed of a magnetically impermeable material.

20. The tool head as claimed in one of claims 3 to 19, **characterized in that** at least the second rotary bearing (52) is embodied as a hybrid bearing whose roller body is composed of an electrically insulating material, preferably of ceramic.

21. The tool head as claimed in one of claims 1 to 20, **characterized in that** one of the two rotary bearings (54) forms a fixed bearing, and the other (52) forms a freely moving bearing which can move axially in relation to the latter.

22. The tool head as claimed in claim 21, **characterized in that** the first rotary bearing (54) is embodied as a fixed bearing and the second rotary bearing (52) is embodied as a freely moving bearing.

23. The tool head as claimed in one of claims 1 to 22, **characterized in that** the adjustment motor (24), the gear means (22) and the adjustable working slide (16) form an enclosed assembly which is detachably connected via a joint (32) to a connecting assembly (38) which has a connecting stem (28).

24. A tool head for use in machine tools comprising a base body (10), comprising at least one working slide (16) which can be adjusted in relation to the base body (10), and comprising an adjustment motor (24) which is arranged in the base body (10) and acts on the working slide (16) via gear means (22), wherein the adjustment motor (24) which is embodied as an electric motor has a stator (45) which is arranged in the base body (10) and a rotor (56) which rotates in the stator, is fitted with an output shaft (50) and is mounted in two rotary bearings (52, 54) which are arranged at a distance from one another, wherein one of the rotary bearings (54) is arranged with an outer ring (58) in a stator housing (60) which is fixed to the base body and with an inner ring (60) directly or indirectly on the output shaft (50), **characterized in that** the adjustment motor (24), the gear means (22) and the adjustable working slide (16) form an enclosed assembly which is detachably connected via a joint (32) to a connecting assembly (38) which has a connecting stem (28).

25. The tool head as claimed in claim 23 or 24, **characterized in that** the connecting assembly (38) has an axially open, cup-shaped receptacle (32) for an axially protruding part of the combined drive/gear/slide assembly.

26. The tool head as claimed in claim 25, **characterized in that** the receptacle (32) of the connecting assembly (38) engages over the protrusion part of the combined assembly in the shape of a cup.

## Revendications

1. Tête d'outil conçue pour être utilisée dans des machines-outils, comprenant un corps de base (10) ; au moins une coulisse de travail (16) pouvant être déplacée par rapport audit corps de base (10) ; et un moteur de réglage (24) logé dans ledit corps de base (10) et agissant sur ladite coulisse de travail (16) par l'intermédiaire d'un moyen de transmission (22), ledit moteur de réglage (24), réalisé sous la forme d'un moteur électrique, englobant un stator (45) disposé dans le corps de base (10) et un rotor (56) qui tourne dans ledit stator, porte un arbre mené (50) et est monté dans deux paliers de rotation (52, 54), l'un (54) desdits paliers de rotation étant disposé, par une bague extérieure (58), dans un carter statorique (60) assujetti au corps de base, et étant calé directement ou indirectement sur l'arbre mené (50) par une bague intérieure (62), **caractérisée par le fait que** le carter statorique (60) comprend une pièce (66) formant douille, reliée au stator (45) avec verrouillage rotatif et coulissant, et faisant partiellement saillie à l'extérieur au-delà dudit stator, dans le sens axial, ainsi qu'un couvercle de portée (68) obturant ladite pièce formant douille, côté transmission, et portant la bague extérieure (58) du premier palier de rotation (54).

2. Tête d'outil selon la revendication 1, **caractérisée par le fait que** l'arbre mené (50) est agencé coaxialement à l'axe de rotation (12) du corps de base (10).

3. Tête d'outil selon la revendication 1 ou 2, **caractérisée par le fait que** le second palier de rotation (52) est logé dans une bague distincte de centrage (70) verrouillée intérieurement au stator (45), du côté tourné à l'opposé du couvercle de portée (68) du carter statorique (60).

4. Tête d'outil selon la revendication 3, **caractérisée par le fait que** le second palier de rotation (52) est consigné à demeure sur la bague de centrage (70) par sa bague extérieure, et sur le rotor (56) par sa bague intérieure.

5. Tête d'outil selon l'une des revendications 1 à 4, **caractérisée par le fait que** le moteur de réglage (54) se présente comme un moteur asynchrone ou comme un moteur à courant continu.

6. Tête d'outil selon l'une des revendications 1 à 5, **caractérisée par le fait que** le stator (45) comporte un empilement de tôles (44) ceinturant le rotor (56) et présentant des têtes d'enroulements (46, 48) dépassant frontalement.

7. Tête d'outil selon la revendication 6, **caractérisée par le fait que** le stator (45) pénètre, par l'une (48) de ses têtes d'enroulements et/ou par une partie de son empilement de tôles (44), dans la pièce (66) formant douille du rotor statorique (60), dans laquelle il est verrouillé à demeure et centré.

8. Tête d'outil selon la revendication 7, **caractérisée par le fait que** la pièce (66) formant douille est intégrée, par collage ou par coulée, dans l'empilement de tôles (44) et/ou dans la tête d'enroulements (48) occupant une position voisine.

9. Tête d'outil selon l'une des revendications 3 à 8, **caractérisée par le fait que** la bague de centrage (70) pénètre dans un espace libre situé à l'intérieur de l'une (46) des têtes d'enroulements et/ou à l'intérieur de l'empilement de tôles (44), et dans lequel ladite bague est verrouillée et centrée.

10. Tête d'outil selon la revendication 9, **caractérisée par le fait que** la bague de centrage (70) est solidarisée, par collage ou coulée, avec la tête d'enroulements (46) associée et/ou avec l'empilement de tôles (44).

11. Tête d'outil selon l'une des revendications 1 à 10, **caractérisée par le fait que** le moteur de réglage (24) porte un codeur (76) à l'une de ses extrémités frontales.

12. Tête d'outil selon la revendication 11, **caractérisée par le fait que** le codeur est logé dans un espace libre annulaire (74), à l'intérieur de l'une (48) des têtes d'enroulements.

13. Tête d'outil selon l'une des revendications 1 à 11, **caractérisée par le fait que** les moyens de transmission forment une transmission démultiplicatrice (22) réalisée, de préférence, comme une transmission à entraînement harmonique.

14. Tête d'outil selon la revendication 13, **caractérisée par le fait que** les arbres d'entrée et de sortie de la transmission démultiplicatrice (22) sont placés coaxialement dans le corps de base.

15. Tête d'outil selon la revendication 14, **caractérisée par le fait que** l'arbre mené (50) du rotor (56) pénètre dans un orifice coaxial d'entraînement de l'arbre d'entrée (64) de la transmission démultiplicatrice (22).

16. Tête d'outil selon la revendication 14, **caractérisée par le fait que** la bague intérieure (62) du premier palier de rotation (54) est reliée, avec verrouillage rotatif, à l'arbre d'entrée (64) de la transmission démultiplicatrice (22) ; et **par le fait que** l'arbre mené (50) du rotor (56) est indirectement monté dans ledit premier palier de rotation (54), par l'intermédiaire dudit arbre d'entrée.

17. Tête d'outil selon l'une des revendications 12 à 15, **caractérisée par le fait que** la transmission à entraînement harmonique comprend un disque ovalisé d'entraînement (82) accouplé, de préférence par l'intermédiaire de l'arbre d'entrée (64), à l'arbre mené (50) du moteur de réglage (24) ; une bague (86) à denture intérieure, reliée au corps de base (10) avec verrouillage rotatif; et une douille flexible (88) à denture extérieure, accouplée à un arbre de sortie.

18. Tête d'outil selon l'une des revendications 1 à 16, **caractérisée par le fait que** le rotor (56), et les parties attenantes de la transmission, présentent un canal central (90) orienté axialement, réalisé sous la forme d'un canal de refroidissement ou d'une traversée fonctionnelle.

19. Tête d'outil selon l'une des revendications 3 à 18, **caractérisée par le fait que** la bague de centrage (70), pénétrant dans le stator (45), consiste en un matériau magnétiquement non conducteur.

20. Tête d'outil selon l'une des revendications 3 à 19, **caractérisée par le fait qu'**au moins le second palier de rotation (52) est réalisé sous la forme d'un palier hybride dont les corps de roulement consistent en un matériau électriquement isolant, de préférence en de la céramique.

21. Tête d'outil selon l'une des revendications 1 à 20, **caractérisée par le fait que** l'un (54) des deux paliers de rotation forme un palier fixe, et l'autre (52) forme un palier fou mobile axialement vis-à-vis du palier précité.

22. Tête d'outil selon la revendication 21, **caractérisée par le fait que** le premier palier de rotation (54) est réalisé comme un palier fixe, et le second palier de rotation (52) est réalisé comme un palier fou.

23. Tête d'outil selon l'une des revendications 1 à 22, **caractérisée par le fait que** le moteur de réglage (24), les moyens de transmission (22) et la coulisse réglable de travail (16) forment un groupe structurel fermé relié de manière libérable, par l'intermédiaire d'une zone de séparation (32), à un groupe structurel de rattachement (38) muni d'un fût de rattachement (28).

24. Tête d'outil conçue pour être utilisée dans des machines-outils, comprenant un corps de base (10) ; au moins une coulisse de travail (16) pouvant être déplacée par rapport audit corps de base (10) ; et un moteur de réglage (24) logé dans ledit corps de base (10) et agissant sur ladite coulisse de travail (16) par l'intermédiaire d'un moyen de transmission (22), ledit moteur de réglage (24), réalisé sous la forme d'un moteur électrique, englobant un stator (45) disposé dans le corps de base (10) et un rotor (56) qui tourne dans ledit stator, porte un arbre mené 50 et est monté dans deux paliers de rotation (52, 54), l'un (54) desdits paliers de rotation étant disposé, par une bague extérieure (58), dans un carter statorique (60) assujetti au corps de base, et étant calé directement ou indirectement sur l'arbre mené (50) par une bague intérieure (62), **caractérisée par le fait que** le moteur de réglage (24), les moyens de transmission (22) et la coulisse réglable de travail (16) forment un groupe structurel fermé relié de manière libérable, par l'intermédiaire d'une zone de séparation (32), à un groupe structurel de rattachement (38) muni d'un fût de rattachement (28).

25. Tête d'outil selon la revendication 23 ou 24, **caractérisée par le fait que** le groupe structurel de rattachement (38) possède un logement (32) en forme de tasse, ouvert axialement, affecté à une partie axialement saillante du groupe structurel combiné entraînement/transmission/coulisse.

26. Tête d'outil selon la revendication 25, **caractérisée par le fait que** le logement (32) du groupe structurel de rattachement (38) vient coiffer, en forme de tasse, la partie saillante du groupe structurel combiné.
